# EUROPÄISCHE PATENTANMELDUNG

(11) **EP 4 628 745 A1**
(43) Veröffentlichungstag der Anmeldung: **08.10.2025**
(21) Anmeldenummer: 25163045.5
(22) Anmeldetag: 11.03.2025
(51) Int. Cl.: F16D 65/18, B21D 5/00, B30B 1/18, B30B 15/10

(54) **ELEKTRISCH BETÄTIGBARE BREMSEINRICHTUNG FÜR ZUMINDEST EINEN BEWEGLICHEN WERKZEUGTRÄGER**

(30) Priorität: 12.03.2024 AT 502102024
(71) Anmelder: TRUMPF Maschinen Austria GmbH & Co. KG., 4061 Pasching (AT)
(72) Erfinder: SPEZIALI, Stefano, 06034 Foligno (PG) (IT)
(74) Vertreter: Burger, Hannes Alfred

(57) **Zusammenfassung**

Die Erfindung betrifft eine elektrisch betätigbare Bremseinrichtung (6, 7) für zumindest einen beweglichen Werkzeugträger (3) einer Umformmaschine (1), insbesondere einer Biegemaschine, vorzugsweise einer Biegepresse, mit einer zwischen einem Maschinenrahmen und dem Werkzeugträger (3) eingesetzten Anordnung eines mit einer ersten dieser Komponenten verbundenen Reibfläche (14) und eines mit der anderen, zweiten Komponente verbundenen Bremselementes (13), das durch die Wirkung eines Elektromagneten (19) zwischen einer Bremsstellung mit Reibschluss mit der Reibfläche und einer gelösten Stellung bewegbar ist. Das Bremselement (13) ist als Anker für den Elektromagneten (19) ausgeführt oder durch einen zwischen dem Elektromagneten (19) und dem Bremselement (13) eingesetzten separaten Anker bewegbar. Das Bremselement (13) oder der Anker weisen weiters zumindest eine Ausnehmung (20) für zumindest einen Zusatzbauteil (21) aus ferromagnetischem Stahl sowie zumindest eine Fixieranordnung (22 bis 27) für den oder die Zusatzbauteil(e) (21) auf.

## Beschreibung

Die Erfindung betrifft eine elektrisch betätigbare Bremseinrichtung für zumindest einen beweglichen Werkzeugträger einer Umformmaschine, insbesondere einer Biegemaschine, vorzugsweise einer Biegepresse, mit einer zwischen einem Maschinenrahmen und dem Werkzeugträger eingesetzten Anordnung eines mit einer ersten dieser Komponenten verbundenen Reibfläche und eines mit der anderen, zweiten Komponente verbundenen Bremselementes, das durch die Wirkung eines Elektromagneten zwischen einer Bremsstellung mit Reibschluss mit der Reibfläche und einer gelösten Stellung bewegbar ist, gemäß dem Oberbegriff des Anspruch 1.

Die Erfindung betrifft auch einen elektromagnetischen Antrieb für eine Umformmaschine, insbesondere Biegemaschine, vorzugsweise Biegepresse, für die Arbeitsbewegung zumindest eines gegenüber einem Maschinenrahmen beweglichen Werkzeugträgers, insbesondere einem Pressantrieb, und mit einer elektromagnetisch betätigbaren Bremseinrichtung, gemäss dem Oberbegriff des Anspruchs 8, sowie eine eine Umformmaschine, insbesondere Biegemaschine, vorzugsweise Biegepresse.

Im Bereich der Automatisierungstechnik und der halb- oder ganz-automatisierten Materialbearbeitungsmaschinen sind Sicherheitseinrichtungen zum Schutz des Bedienungspersonals und auch zum Schutz vor Fehlbedienung und Beschädigung der Maschine selbst von grosser Bedeutung. Insbesondere sind dabei Bremseinrichtungen für spezielle motorisch bewegte Komponenten hoch relevant. Ein Beispiel dafür sind Sicherheitsbremsen bei Umformmaschinen, beispielsweise Biegepressen, deren Werkzeugträger elektromotorisch bewegbar sind.

Die EP2333380A1 offenbart im Zusammenhang mit einem linearen Aktuator eine Bremseinrichtung mit einer rotierenden Bremsscheibe und einer stationären Bremsscheibe, welche relativ zur rotierenden Bremsscheibe bewegbar ist und durch Reibung eine Bremsung der Antriebswelle ermöglicht.

In der WO2022178563A1 ist ein elektromechanischer Antrieb für insbesondere eine Umformmaschine offenbart, der eine Bremseinrichtung mit einer Bremsscheibe und einem Bremselement integriert hat, welches durch eine elektromagnetische Anordnung zwischen einer Bremsstellung und einer gelösten Stellung bewegbar ist. Damit kann eine unmittelbare und schnell einsetzende Bremswirkung erzielt werden, durch welche die bewegte Komponente der Maschine schnellstmöglich zum Stillstand gebracht werden kann.

Deren Bremsleistung derartiger elektromagnetisch betätigter Bremseinrichtungen wird durch den Haltestrom des eingesetzten Elektromagneten, die magnetischen Eigenschaften der weiteren Komponenten der Bremseinrichtung und die damit verbundene Entladezeit beeinflusst. Die Nachteile bekannter Bremseinrichtungen bestehen insbesondere darin, dass Unterschiede in der Materialqualität und der damit verbundene Einfluss auf die magnetische Permeabilität des Elektromagnet-Anker-Systems insbesondere in der Produktion grossen Probleme darstellen, da die Reproduzierbarkeit der Bremsleistung nur mit grossem Aufwand gewährleistet werden kann. Die Adaptierung muss unterschiedliche Materialeigenschaften ausgleichen, die durch die Herkunft aus unterschiedlichen Fertigungsserien der Anker und der Elektromagneten entsteht. Dabei muss die Gesamtanordnung die vorgegebenen Sicherheitsbestimmungen erfüllen.

Dieses Problem sollte durch ein normalerweise geschlossenes System der Sicherheitsbremse gelöst werden, bei welchem der Haltestrom des Ankers in reproduzierbarer Weise einstellbar ist. Diese Einstellung kann auf mehrere Weisen durchgeführt werden, um das Endziel eines korrekten Haltestroms und damit Bremsweges zu erreichen. Der Weg, die Dicke des Ankers anzupassen, um den korrekten Haltestrom zu erzielen, ist sehr aufwendig und teuer, so dass er in Serienfertigung nicht implementierbar ist.

Aufgabe der vorliegenden Erfindung war es, die Nachteile des Standes der Technik zu überwinden und eine Bremseinrichtung derart auszuführen, dass eine einfach in der Serienproduktion implementierbare Adaptierung der magnetischen Eigenschaften zur Erzielung der Reproduzierbarkeit des Haltestroms innerhalb vorgegebener Grenzen möglich ist.

Diese Aufgabe wird durch Vorrichtungen gemäß den Ansprüchen gelöst.

Die erfindungsgemäße elektrisch betätigbare Bremseinrichtung ist dadurch gekennzeichnet, dass das Bremselement als Anker für den Elektromagneten ausgeführt oder durch einen zwischen dem Elektromagneten und dem Bremselement eingesetzten separaten Anker bewegbar ist, und wobei das Bremselement oder der Anker zumindest eine Ausnehmung für zumindest einen Zusatzbauteil vorzugsweise aus ferromagnetischem Stahl sowie zumindest eine Fixieranordnung für den oder die Zusatzbauteil(e) aufweist. Damit können, wenn nötig, Zusatzbauteile in den Anker oder das Bremselement eingesetzt werden, um die magnetischen Eigenschaften derart zu verändern, dass der Haltestrom des Elektromagneten innerhalb der vorgegebenen Grenzen liegt. Dies ergibt eine einfache und kostengünstige Lösung mit flexiblem Aufbau, die gut in einer Serienproduktion implementiert werden kann und das Problem der Variation des magnetischen Verhaltens des Ankers löst.

Bevorzugt ist dabei das Bremselement oder der Anker als kreisrunde Scheibe, gegebenenfalls mit einer zentralen, vorzugsweise kreisförmigen, Durchgangsbohrung ausgeführt, wobei an der dem Elektromagneten entgegensetzten Seite zumindest eine Ausnehmung mit zumindest je einer Fixieranordnung ausgearbeitet ist. Damit kann speziell für drehende Komponenten eine optimale Auslegung erzielt werden.

Um allfällige Unwucht zu vermeiden und die Symmetrie optimal beizubehalten, ist eine weitere vorzugsweise Ausführungsform dadurch gekennzeichnet, dass an der dem Elektromagneten entgegensetzten Seite eine konzentrisch gelegene Ausnehmung mit zumindest einer Fixieranordnung ausgearbeitet ist.

Beispielsweise ist dabei vorgesehen, dass die Fixieranordnung zumindest eine in die Ausnehmung einsetzbare Scheibe oder zumindest einen einsetzbaren Ring umfasst, der in der Ausnehmung lösbar fixierbar ist. Bevorzugt werden Platten aus ferromagnetischem Material, insbesondere mit Laser auf Dicken von beispielsweise 0,5 mm geschnitten, und mit einem der Ausnehmung entsprechenden Aussendurchmesser dazu verwendet.

Bevorzug ist dabei ein Ring aus paramagnetischem oder nicht magnetischem Material mit einem Aussengewinde, das jenem des Ankers bzw. des Bremselementes entspricht, zur Fixierung der Zusatzbauteile, insbesondere der Platten, vorgesehen. Bevorzugt wird dazu Aluminium verwendet, da dies ein leichtes und dennoch stabiles Material ist, das magnetische Feld aber nicht beeinflusst.

Um jegliche Bewegung des Ringes zu unterbinden und allfällige Zusatzbauteile sicher im Anker oder im Bremselement zu halten, sind Sicherheitsbauteile vorgesehen. Bevorzugt ist dazu die Bremseinrichtung dadurch gekennzeichnet, dass jede Fixieranordnung zumindest eine radiale Bohrung mit vorzugsweise lösbar einsetzbaren Halteelementen, vorzugsweise mit radial verstellbaren und auf die Scheibe bzw. den Ring radial einwirkenden Halteschrauben, umfasst. Bevorzugt sind insbesondere vier radiale Schrauben mit Konterschrauben sowie ein Kleber vorgesehen, um eine Verdrehung des Ringes während des Betriebs zu verhindern.

Zur ersten Fixierung und für eine Haltewirkung auf die Zusatzbauteile speziell nach dem ersten Einsetzen in die Ausnehmung ist bevorzugt vorgesehen, dass die Scheibe bzw. der Ring mit einem Aussengewinde und die Innenwandung der Ausnehmung mit einem komplementären Innengewinde versehen sind.

Für den Fall, dass eine nachträgliche Adaptierung der magnetischen Eigenschaften des System Elektromagnet-Anker/Bremselement erforderlich war, ist erfindungsgemäss die Bremseinrichtung dadurch gekennzeichnet, dass zumindest eine Scheibe aus ferromagnetischem Material, die in die Ausnehmung im Bremselement oder Anker eingesetzt und durch die Fixieranordnung darin lösbar fixiert ist.

Zur Lösung der erfindungsgemässen Aufgabe ist ein elektromagnetischer Antrieb für eine Umformmaschine, insbesondere Biegemaschine, vorzugsweise Biegepresse, derart gestaltet, dass die Bremseinrichtung gemäss einem der vorhergehenden Absätze ausgeführt ist.

Bevorzugt ist ein derartiger Antrieb als Spindelantrieb aufgebaut und ausgestattet mit einem Rotationsteil, der durch einen Motor um eine Rotationsachse in Rotation versetzbar ist, umfassend zumindest eine mit dem Rotationsteil mitdrehende Bremsscheibe und ein in axialer Richtung verstellbares Bremselement, welches in der Bremsstellung auf die Bremsscheibe einwirkt, wobei an dem Bremselement zumindest eine Gegenfläche ausgebildet ist, die zumindest einer Reibfläche der Bremsscheibe zugewandt ist und in der Bremsstellung mit der ersten Reibfläche zusammenwirkt, und wobei die Bremseinrichtung zumindest einen Elektromagneten umfasst, durch den das Bremselement in die gelöste Stellung und/oder in die Bremsstellung bringbar ist. Mit einem derartigen Antrieb ist eine unmittelbare und schnell einsetzende Bremswirkung mit für jeden gefertigten Antrieb gleich reproduzierbarer Wirkung möglich, bei hoher Bremswirkung und Effizienz des Bremsvorganges.

Eine weiter Ausführungsform eines erfindungsgemässen elektromagnetischen Antriebs sieht vor, dass vorzugsweise der Elektromagnet in einem abnehmbaren Gehäuseteil des elektromechanischen Antriebes eingesetzt ist. Eine solche Variante hat den Vorteil, dass bei Stromausfall oder einem Ansteuerungsfehler die Elektromagnete stromlos sind und die Bremseinrichtung automatisch in die Bremsstellung fällt.

Eine weitere alternative Ausführungsform für den Antrieb ist dadurch gekennzeichnet, dass der Motor und die Bremseinrichtung in einem gemeinsamen Gehäuse untergebracht sind. Dadurch wird die Unmittelbarkeit der Bremswirkung erhöht, da das Bremsen im unmittelbaren Bereich der Generierung des Motormoments erfolgt.

Die Erfindung umfasst zur Lösung der eingangs gestellten Aufgabe schliesslich auch eine Umformmaschine, insbesondere Biegemaschine, vorzugsweise Biege-presse, die gekennzeichnet ist durch eine Bremseinrichtung wie oben beschrieben und/oder einen elektromagnetischen Antrieb wie zuvor beschrieben.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Umformmaschine, in Form einer Biegepresse, mit Antrieben und zumindest einer Bremseinrichtung;
- Fig. 2: eine beispielhafte Ausführungsform eines erfindungsgemässen elektromechanischen Antriebs mit integrierter Bremseinrichtung im Schnitt;
- Fig. 3: eine Ansicht einer beispielhaften Ausführungsform einer Anordnung Elektromagnet - Bremselement bzw. Anker von schräg unten;
- Fig. 4: einen Schnitt entlang der Mittelachse der Anordnung Elektromagnet - Bremselement der Fig. 3; und
- Fig. 5: einen vergrösserte Darstellung der linken Seite der Fig. 4 zur deutlicheren Darstellung bestimmter Details.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

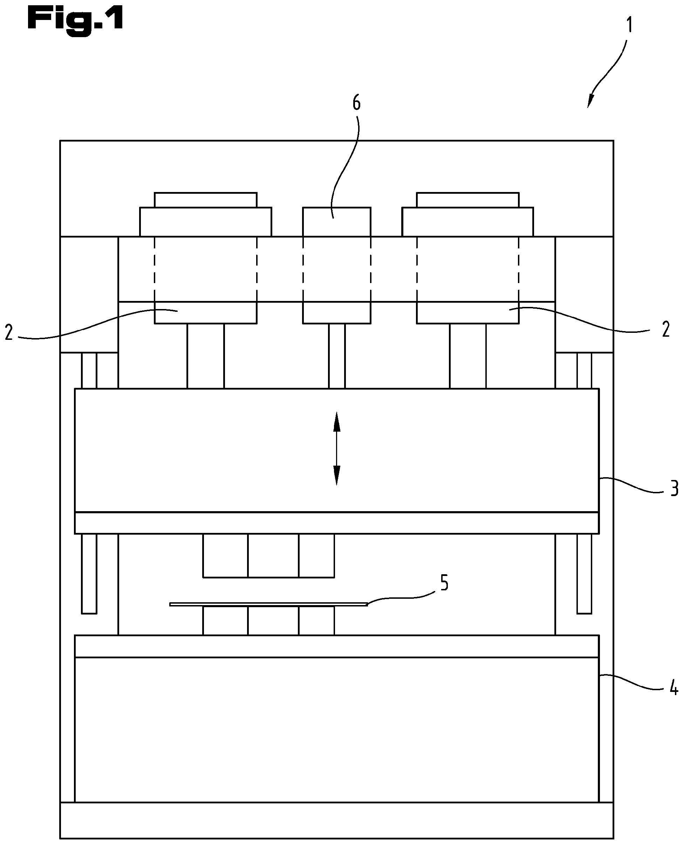

Fig. 1 zeigt eine Umformmaschine 1 in Form einer Biegepresse, mit zumindest einem Antrieb 2 für die Arbeitsbewegung eines Werkzeugträgers 3, vorzugsweise eines Umformwerkzeuges, insbesondere einen Pressantrieb. Der Antrieb bzw. die Antriebe 2 sind dabei vorzugsweise als elektromechanische Antriebe ausgebildet. Eine solche Umformmaschine kann einen ersten (z.B. oberen) Werkzeugträger 3 und einen zweiten (z.B. unteren) Werkzeugträger 4 umfassen, deren Relativbewegung die Arbeitsbewegung zur Bearbeitung des Werkstücks 5 ist.

Vorteilhafterweise ist zumindest eine Bremseinrichtung 6 zusätzlich zu den Antrieben 2 vorgesehen. Wie weiter unten erläutert wird, können auch die Antriebe 2 selbst mit eigenen Bremseinrichtungen 7 ausgestattet sein, wobei alle Bremseinrichtungen 6, 7 auf dem gleichen Prinzip basieren und im Wesentlichen gleich aufgebaut sind.

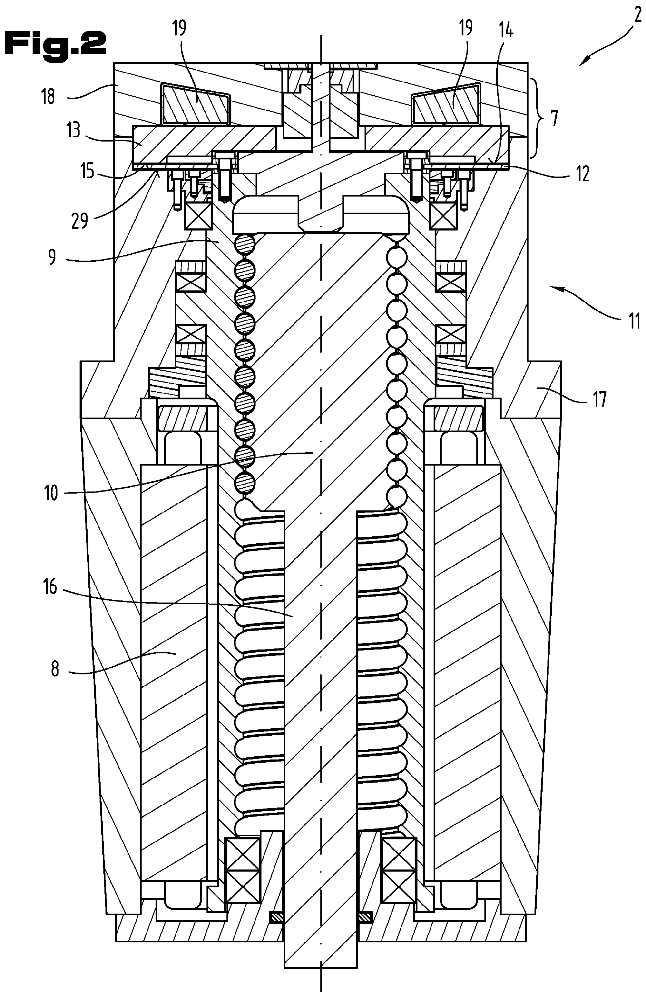

Der nun in Fig. 2 im Schnitt dargestellte elektromechanische Antrieb 2 eignet sich besonders gut für den Einsatz in einer Biegemaschine, da die integrierte Bremseinrichtung 7 besonders schnell reagiert und damit insbesondere das Bedienpersonal zuverlässig geschützt (insbesondere in Fällen, in denen eine Abschaltung oder ein Stopp/Verlangsamung der Arbeitsbewegung für die Sicherheit relevant ist) aber auch Werkstücke vor falschen bzw. fehlerbehafteten Bearbeitungsroutinen "geschützt" werden.

Der beispielhafte Antrieb 2 umfasst einen Motor 8 und einen Rotationsteil 9, der durch den Motor 8 um eine Rotationsachse 10 in Rotation versetzbar ist. Der Motor 8 ist an der Innenseite des Gehäuses 11 gelagert und z.B. in Form von Wicklungen ausgeführt. Der am Rotationsteil 9 angeordnete Rotor ist z.B. in Form von Permanentmagneten ausgeführt. Bevorzugt sind der Motor 8 und die Bremseinrichtung 7 zusammen im gemeinsamen Gehäuse 11 untergebracht.

Integriert in den Antrieb 2 ist die zwischen einer Bremsstellung und einer gelösten Stellung betätigbare Bremseinrichtung 5, die eine mit dem Rotationsteil 9 mitdrehende Bremsscheibe 12 und ein in axialer Richtung verstellbares Bremselement 13 umfasst, wobei letzteres in der Bremsstellung auf die Bremsscheibe 12 einwirkt. Insbesondere ist auf der Bremsscheibe 12 eine ringförmig um die Rotationsachse 10 verlaufenden Reibfläche14 ausgebildet. Am Bremselement 13 ist an dessen der Bremsscheibe 12 zugewandten Seite eine ebenfalls vorzugsweise ringförmige Gegenfläche 15 ausgebildet ist, die in der Bremsstellung mit der ersten Reibfläche 14 zusammenwirkt.

In der dargestellten bevorzugten Variante ist der elektromechanische Antrieb 2 ein Spindelantrieb, wobei der Rotationsteil 9, mit dem die Bremsscheibe 12 verbunden ist, in Form einer Gewindemutter ausgebildet ist, welche mit einer Spindel 16 des Spindelantriebs zusammenwirkt. Das untere Ende der Spindel 16 bewegt sich - bei Betätigung des Motors 8 und Rotation der Gewindemutter (Rotationsteil 3)) linear entlang der Rotationsachse 10 nach unten bzw. nach oben.

Das Gehäuse 11 kann, wie Fig. 2 zeigt, auch mehrteilig ausgeführt sein, wobei die Bremseinrichtung 7 in einem vorzugsweise zweiteiligen Gehäuseoberteil 17, 18 angeordnet ist. Der untere Gehäuseoberteil 17 kann eine weitere Gegenfläche 29 für die Bremsscheibe 12 aufweisen, um auf diese Weise das Bremsmoment und die dabei entstehende Reibungswärme direkt in das Gehäuse einzuleiten. Im oberen Gehäuseoberteil 18 ist ein bevorzugt ein als Elektromagnet 19 ausgeführter und das Bremselement 13 bewegender Aktor aufgenommen, durch den das Bremselement 13 in die gelöste Stellung und/oder in die Bremsstellung bringbar ist. Bevorzugt ist das Bremselement 13 durch Federkraft in Richtung der Bremsstellung vorgespannt und wird bei Bestromung des Elektromagneten 19 mit einem Haltestrom in der gelösten Stellung gehalten. Typischerweise liegt der Haltestrom zwischen 2 und 3 A, vorzugsweise zwischen 2,1 und 2,5 A. Der Aktor kann - ebenso wie Elemente zur Vorspannung des Bremselementes 13 oder des Ankers - im abnehmbaren oberen Gehäuseoberteil 18 des elektromechanischen Antriebes 2 eingesetzt sein.

Wie in dem in den Zeichnungen dargestellten Ausführungsbeispiel realisiert, kann das Bremselement 13 selbst als Anker des Elektromagneten 19 ausgeführt sein, wobei aber auch eine getrennte Ausführung von Anker und separatem Bremselement, das vom zwischen Bremsscheibe 12 und Bremselement 13 eingesetzten Anker in Richtung Bremsstellung beaufschlagt wird, denkbar ist.

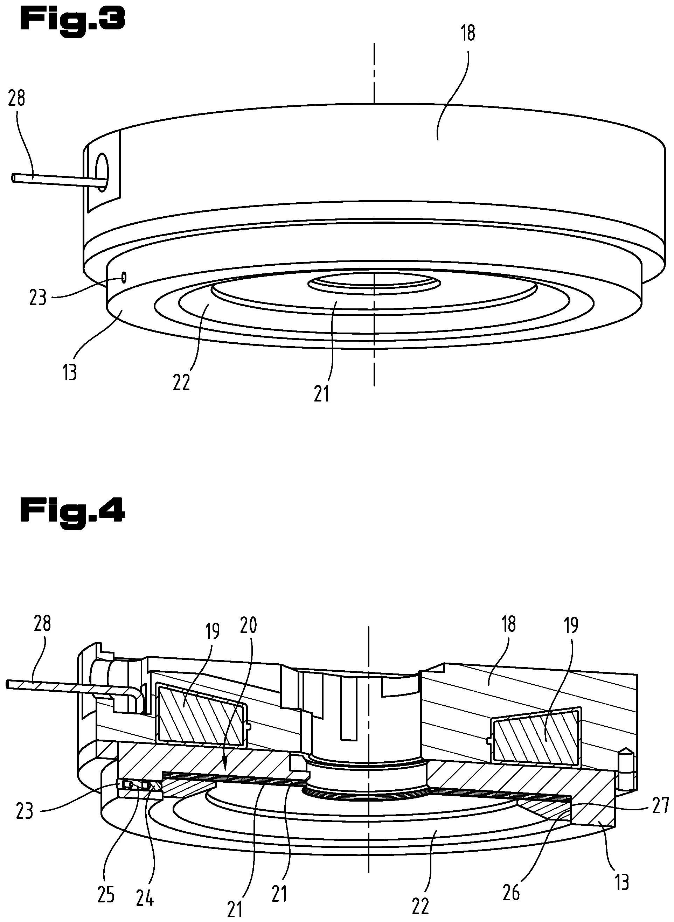

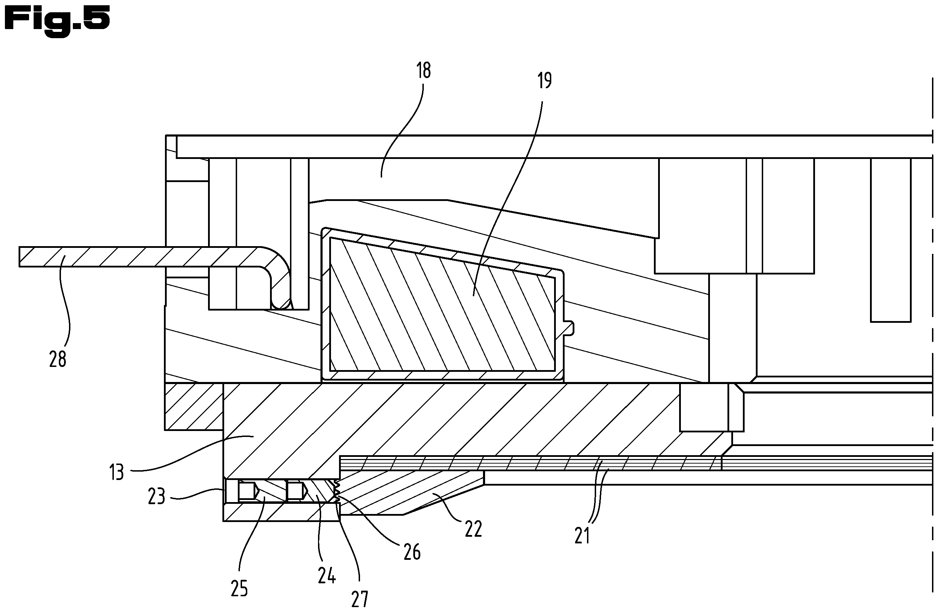

Das Bremselement 13 - oder der Anker - weist, wie in Fig. 4 und Fig. 5 gut zu erkennen ist, zumindest eine Ausnehmung 20 an der dem Elektromagneten 19 entgegensetzten Seite für zumindest einen Zusatzbauteil 21, vorzugsweise aus ferromagnetischem Stahl, sowie zumindest eine Fixieranordnung 22, 24, 25 für den oder die Zusatzbauteil(e) 21 auf.

Bevorzugt ist das Bremselement 13 oder der Anker als kreisrunde Scheibe, gegebenenfalls mit einer zentralen, vorzugsweise kreisförmigen, Durchgangsbohrung ausgeführt, wobei aber auch andere Ausführungen möglich sind, beispielsweise segmentartig um die Rotationsachse 10 angeordnete Teilstücke.

Die Fixieranordnung 22, 24, 25 umfasst vorzugsweise eine Scheibe oder einen Ring 22, die ebenfalls in die Ausnehmung 20 einsetzbarer und darin lösbar fixierbar ist, um die Zusatzbauteile in der Ausnehmung zu halten. Bevorzugt ist dabei ein Ring aus paramagnetischem oder nicht magnetischem Material mit einem Aussengewinde 26, das komplementär zu einem vorzugsweise an der Seitenwand des Ankers bzw. des Bremselementes 13 ausgearbeiteten Innengewinde 27 gestaltet ist, welche Gewindeverbindung auch als Fixiereinrichtung dient. Bevorzugt wird als Material für den Ring 22 Aluminium verwendet.

Bevorzugt werden als Zusatzbauteile 21 Platten aus ferromagnetischem Material eingesetzt, insbesondere mit Laser auf Dicken von beispielsweise 0,5 mm geschnittene Scheiben, mit einem der Ausnehmung 20 entsprechenden Aussendurchmesser. Über diese Zusatzbauteile 21, die in den Anker oder das Bremselement 13 eingesetzt werden können, ist eine Veränderung der magnetischen Eigenschaften des Ankers bzw. des Bremselementes 13 derart möglich, dass der Haltestrom des Elektromagneten 19 innerhalb der vorgegebenen Grenzen liegt.

Um jegliche Bewegung des Ringes 22 zu unterbinden und allfällige Zusatzbauteile 21 sicher im Anker oder im Bremselement 13 zu halten, sind bevorzugt weitere Sicherheitsbauteile 24, 25 vorgesehen. Bevorzugt weist jede Fixieranordnung zumindest eine radiale Bohrung 23 mit vorzugsweise lösbar einsetzbaren Halteelementen, vorzugsweise mit radial verstellbaren und auf die Scheibe 21 bzw. den Ring 22 radial einwirkenden Halteschrauben 24, umfasst. Bevorzugt sind insbesondere vier radiale Schrauben 24 mit Konterschrauben 26 vorgesehen, um eine Lockerung der Scheiben 21 und/oder eine Verdrehung des Ringes 22 während des Betriebs des Antriebs 2 zu verhindern. Gegebenenfalls kann die Haltewirkung noch durch einen Kleber ergänzt werden.

Schliesslich ist in den Fig. 3 bis 5 noch die Leitung 28 für die Stromversorgung des Elektromagneten 19 zu sehen, die in den oberen Gehäuseoberteil 18 geführt ist.

### Bezugszeichenaufstellung

- 1: Umformmaschine
- 2: Antrieb
- 3: Oberer Werkzeugträger
- 4: Unterer Werkzeugträger
- 5: Werkstück
- 6: Bremseinrichtung
- 7: Bremseinrichtung
- 8: Motor
- 9: Rotationsteil
- 10: Rotationsachse
- 11: Gehäuse
- 12: Bremsscheibe
- 13: Bremselement
- 14: Reibfläche der Bremsscheibe
- 15: Gegenfläche
- 16: Spindel
- 17: Unterer Gehäuseoberteil
- 18: Oberer Gehäuseoberteil
- 19: Elektromagnet
- 20: Ausnehmung
- 21: Ferromagnetische Scheibe
- 22: Aluminiumring
- 23: Gewindebohrung
- 24: Halteschraube
- 25: Konterschraube
- 26: Aussengewinde
- 27: Innengewinde
- 28: Stromleitung
- 29: Gegenfläche

## Patentansprüche

1. Elektrisch betätigbare Bremseinrichtung (6, 7) für zumindest einen beweglichen Werkzeugträger (3) einer Umformmaschine (1), insbesondere einer Biegemaschine, vorzugsweise einer Biegepresse, mit einer zwischen einem Maschinenrahmen und dem Werkzeugträger (3) eingesetzten Anordnung eines mit einer ersten dieser Komponenten verbundenen Reibfläche (14) und eines mit der anderen, zweiten Komponente verbundenen Bremselementes (13), das durch die Wirkung eines Elektromagneten (19) zwischen einer Bremsstellung mit Reibschluss mit der Reibfläche und einer gelösten Stellung bewegbar ist, **dadurch gekennzeichnet, dass** das Bremselement (13) als Anker für den Elektromagneten (19) ausgeführt oder durch einen zwischen dem Elektromagneten (19) und dem Bremselement (13) eingesetzten separaten Anker bewegbar ist, und wobei das Bremselement (13) oder der Anker zumindest eine Ausnehmung (20) für zumindest einen Zusatzbauteil (21) aus ferromagnetischem Stahl sowie zumindest eine Fixieranordnung (22 bis 27) für den oder die Zusatzbauteil(e) (21) aufweist.

2. Bremseinrichtung nach Anspruch 1, **dadurch gekennzeichnet, dass** das Bremselement (13) oder der Anker als kreisrunde Scheibe, gegebenenfalls mit einer zentralen, vorzugsweise kreisförmigen, Durchgangsbohrung ausgeführt sind, wobei an der dem Elektromagneten (19) entgegensetzten Seite zumindest eine Ausnehmung (20) mit zumindest je einer Fixieranordnung (22 bis 27) ausgearbeitet ist.

3. Bremseinrichtung nach Anspruch 2, **dadurch gekennzeichnet, dass** an der dem Elektromagneten (19) entgegensetzten Seite eine konzentrisch gelegene Ausnehmung (20) mit zumindest einer Fixieranordnung (22 bis 27) ausgearbeitet ist.

4. Bremseinrichtung nach Anspruch 3, **dadurch gekennzeichnet, dass** die Fixieranordnung (22 bis 27) zumindest eine(n) in die Ausnehmung (20) einsetzbare Scheibe oder einsetzbaren Ring (22) umfasst, der in der Ausnehmung (20) lösbar fixierbar ist.

5. Bremseinrichtung nach Anspruch 4, **dadurch gekennzeichnet, dass** die Scheibe bzw. der Ring (22) mit einem Aussengewinde (26) und die Innenwandung der Ausnehmung (20) mit einem komplementären Innengewinde (27) versehen sind.

6. Bremseinrichtung nach einem der Ansprüche 2 bis 5, **dadurch gekennzeichnet, dass** jede Fixieranordnung (22 bis 27) zumindest eine radiale Bohrung (23) mit vorzugsweise lösbar einsetzbaren Halteelementen (24, 25), vorzugsweise mit radial verstellbaren und auf die Scheibe bzw. den Ring (22) radial einwirkenden Halteschrauben (24), umfasst.

7. Bremseinrichtung nach einem der Ansprüche 1 bis 6, **gekennzeichnet durch** zumindest eine Scheibe (21) aus ferromagnetischem Material, die in die Ausnehmung (20) im Bremselement (13) oder Anker eingesetzt und durch die Fixieranordnung (22 bis 27) darin lösbar fixiert ist.

8. Elektromagnetischer Antrieb (2) für eine Umformmaschine (1), insbesondere Biegemaschine, vorzugsweise Biegepresse, für die Arbeitsbewegung zumindest eines gegenüber einem Maschinenrahmen beweglichen Werkzeugträgers (3), insbesondere einem Pressantrieb, und mit einer elektromagnetisch betätigbaren Bremseinrichtung (7), **dadurch gekennzeichnet, dass** die Bremseinrichtung (7) gemäss einem der Ansprüche 1 bis 7 ausgeführt ist.

9. Elektromagnetischer Antrieb (1) nach Anspruch 8, vorzugsweise Spindelantrieb, mit einem Rotationsteil (9), der durch einen Motor (8) um eine Rotationsachse (10) in Rotation versetzbar ist, umfassend zumindest eine mit dem Rotationsteil (9) mitdrehende Bremsscheibe (12) und ein in axialer Richtung verstellbares Bremselement (13), welches in der Bremsstellung auf die Bremsscheibe (12) einwirkt, wobei an dem Bremselement (13) zumindest eine Gegenfläche (15) ausgebildet ist, die zumindest einer Reibfläche (14) der Bremsscheibe (12) zugewandt ist und in der Bremsstellung mit der ersten Reibfläche (14) zusammenwirkt, und wobei die Bremseinrichtung (7) zumindest einen Elektromagneten (19) umfasst, durch den das Bremselement (13) in die gelöste Stellung und/oder in die Bremsstellung bringbar ist.

10. Elektromagnetischer Antrieb (1) nach Anspruch 8 oder 9, **dadurch gekennzeichnet, dass** vorzugsweise der Elektromagnet (22) in einem abnehmbaren Gehäuseteil (18) des elektromechanischen Antriebes (2) eingesetzt ist.

11. Elektromagnetischer Antrieb (1) nach Anspruch 8 oder 9, **dadurch gekennzeichnet, dass** der Motor (8) und die Bremseinrichtung (7) in einem gemeinsamen Gehäuse (11) untergebracht sind.

12. Umformmaschine (1), insbesondere Biegemaschine, vorzugsweise Biegepresse, **gekennzeichnet durch** eine Bremseinrichtung (6, 7) nach einem der Ansprüche 1 bis 7 und/oder einen elektromagnetischen Antrieb (2) nach einem der Ansprüche 8 bis 11.
